# EUROPEAN PATENT APPLICATION

(11) **EP 4 679 517 A1**
(43) Date of publication of application: **14.01.2026**
(21) Application number: 25770920.4
(22) Date of filing: 21.02.2025
(51) Int. Cl.: H01M 4/13

(54) **COMPOSITE NEGATIVE ELECTRODE SHEET, PREPARATION METHOD THEREFOR, AND LITHIUM ION BATTERY USING SAME**

(30) Priority: 10.05.2024 CN 202410583089
(71) Applicant: Eve Power Co., Ltd., Jingmen, Hubei 448000 (CN)
(72) Inventor: LIU, Fanfen, Jingmen, Hubei 448000 (CN); ZENG, Hongchun, Jingmen, Hubei 448000 (CN); JIN, Lun, Jingmen, Hubei 448000 (CN); FU, Hang, Jingmen, Hubei 448000 (CN); LIU, Qingsong, Jingmen, Hubei 448000 (CN)
(74) Representative: Stöckeler, Ferdinand
(86) International application number: PCT/CN2025/078442
(87) International publication number: WO 2025/232315

(57) **Abstract**

A composite negative electrode sheet, a preparation method thereof, and a lithium ion battery using the same are provided. The composite negative electrode sheet includes a current collector, an active coating and an insulation coating that are disposed in sequence. The insulation coating includes a polymer, an inorganic filler, and a fast ion conductor, the active coating includes a binder and an active material, and a solubility parameter difference between the polymer and the binder is expressed as |Δδ| that is greater than 0.5 (J/cm³)^{1/2}.

## Description

This application claims priority to Chinese Patent Application No. 2024105830892, filed on May 10, 2024, the entire disclosure of which are incorporated herein by reference.

### TECHNICAL FIELD

The present disclosure belongs to the field of lithium ion batteries, and in particular, relates to a composite negative electrode sheet, a preparation method thereof, and a lithium ion battery using the same.

### BACKGROUND

With the rapid development of portable electronic devices, electric vehicles, and smart grids, the demand for high-performance electrochemical memory devices is increasing. Lithium-ion batteries have consistently held an important position in the commercial market due to their high energy density, high operating voltage, long cycle life and minimal memory effect.

To meet market demands, the development of lithium ion batteries with high energy density, high cycle stability, and high safety performance has become a future trend. The lithium ion battery includes a battery cell made of a positive electrode sheet, a negative electrode sheet, and a separator, where the separator functions to separate the positive electrode sheet from the negative electrode sheet, so that electrons in the battery cannot freely pass through the battery, but the ions in the electrolyte can freely pass between the positive electrode sheet and the negative electrode sheet to ensure safety of the battery.

### SUMMARY

### Technical Problem

The conventional separator of the battery is made of a resin material such as polyethylene or polypropylene, and when the battery is operated in a relatively high temperature, the separator is prone to shrinkage or melting, thereby causing the positive electrode sheet and the negative electrode sheet to directly contact each other, resulting in short-circuit induced thermal runaway of the battery and ultimately causing battery combustion and explosion, which limits the development of lithium ion batteries.

### Technical solutions

In a first aspect, the present disclosure provides a composite negative electrode sheet including a current collector, an active coating and an insulation coating that are disposed in sequence. The insulation coating includes a polymer, an inorganic filler, and a fast ion conductor, the active coating includes a binder and an active material, and a solubility parameter difference between the polymer and the binder is expressed as |Δδ| that is greater than 0.5 (J/cm³)^{1/2}

In a second aspect, the present disclosure provides a method for preparing the above-described composite negative electrode sheet, including S1. uniformly mixing the binder and the active material to prepare an active slurry, and applying the active slurry to the current collector to prepare the active coating; S2. uniformly mixing the polymer with a solvent to prepare a reaction system, adding the inorganic filler and the fast ion conductor to the reaction system to prepare an insulation slurry, applying the insulation slurry on the active coating to form the insulation coating so that the insulation coating and the current collector are connected through the active coating, to prepare the composite negative electrode sheet.

In a third aspect, the present disclosure provides a lithium ion battery including a positive electrode, a negative electrode, an electrolyte, and a separator disposed between the positive electrode and the negative electrode, and the negative electrode includes the composite negative electrode sheet described above.

### Beneficial Effect

The composite negative electrode sheet provided in the present disclosure has the characteristics of stable structure, high ion transmission efficiency and high thermal stability. A solubility parameter (SP) is a physical constant that measures the solubility of a material. A solubility parameter of the polymer in the present disclosure is determined by estimating the molar attraction constant of each group or atom in the structural unit, with the formula of *δ* = *d*/*M·*Σ*Gᵢ,* where *d* is density in g/cm³; M is the relative molecular mass of the repeating chain in g/mol; Gi is the molar attraction constant of the chemical group constituting the molecule in (J·cm³)^{1/2}/mol; and δ is the solubility parameter of the polymer in (J/cm³)^{1/2}. The solubility parameter of the polymer is denoted by δ1, the solubility parameter of the binder is denoted by δ2, and the solubility parameter difference between the polymer and the binder is |△δ|=|δ1-δ2|. By regulating the polymer types in the binding phase of the insulation coating and the binder in the active coating, the solubility parameter difference |△δ| between the polymer and binder is maintained above 0.5. Thus, mutual dissolution between the polymer and binder is inhibited, effectively enhancing the interfacial isolation capability between the insulation coating and the active coating while maintaining low interfacial resistance. This improves the structural stability of the composite negative electrode sheet.

On the other hand, the insulation coating provided by the present disclosure has the advantages of electronic insulation and high ion transport efficiency. When the separator can still separate the positive and negative electrode sheets, by using a composite negative electrode sheet with high lithium ion transmission efficiency, the lithium ion intercalation rate of the negative electrode can be increased, the possibility of lithium ion and electrons meeting on the surface of the insulation layer to cause lithium precipitation of the negative electrode is reduced, thereby inhibiting the growth of lithium dendrites, so as to avoid piercing of the separator of the battery and a short circuit inside the battery, even the occurrence of potential safety hazards such as fire explosion. When the separator is damaged or the separator generates heat shrinkage in a high-temperature state, the insulation coating of the composite negative electrode sheet can effectively prevent direct contact between the conductive components of the positive electrode and the negative electrode, prevent an internal short circuit of the battery, promote lithium ions to be embedded into the active coating through the insulation coating in the battery cycle process, improve the charging and discharging performance of the battery, and prolong the cycle life of the battery.

There is a strong Lewis acid-base interaction between the chemical group on the surface of the inorganic filler and the fast ion conductor in the insulation coating and the cation/anion in the lithium salt, and the interaction can fix the anion or hinder the anion transport, thereby jointly promoting the dissociation and ion transport of the lithium salt in the electrolyte. The polar atoms in the polymer can coordinate with the lithium ion dissociated from the lithium salt, and transmit ions through the polymer's chain segment motion coupling-decoupling, thereby achieving an increase in ionic conductivity and lithium ion transmission rate. In summary, by adjusting the types of materials in the insulation coating and the active coating, the composite negative electrode sheet meets the above-mentioned requirements, so that the lithium ion transmission can be promoted, and the safety performance of the battery to which the composite negative electrode sheet is applied can be improved.

By using the composite negative electrode sheet as the negative electrode, a binder commonly used for the negative electrode can be selected to prepare the active coating, and the lithium ion battery using the composite negative electrode sheet has high thermal stability and excellent cycle performance.

### BRIEF DESCRIPTION OF THE DRAWINGS

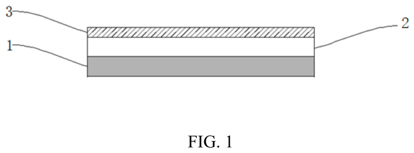

FIG. 1 is a schematic view of a negative electrode sheet according to Embodiment 1 of the present disclosure.

List of reference numerals: 1-negative current collector, 2-negative active coating, 3-insulation coating.

### DETAILED DESCRIPTION

In some embodiments, |△δ|>8.5 (J/cm³)^{1/2}.

In some embodiments, a ratio of the total mass of an inorganic filler and a fast ion conductor to a mass of a polymer in an insulation coating is 80 to 94: 6 to 20. For example, the ratio of the total mass of the inorganic filler and the fast ionic conductor to the mass of the polymer is 94: 6, 90: 10, 85: 15, or 80: 20. By adjusting and controlling the amounts of the inorganic filler, the fast ion conductor, and the polymer to satisfy the above mass ratio, the distribution uniformity inside the insulation coating can be improved, the bonding force between the inorganic filler, the fast ion conductor, and the polymer can be improved, and the adhesion force between the insulation coating and an active coating can be improved, thereby enhancing the impact resistance, the structural stability, and the mechanical strength of the composite negative electrode sheet. Generally, a gas generation may occur during the battery cycle process, and by adjusting and controlling the ratio of the materials in the insulation coating, the insulation coating can withstand gas impact, and resist local delamination, thereby improving the battery cycle stability.

In some embodiments, the solubility parameter of the polymer is denoted as δ1, where δ1 is 12.7 to 24.9 (J/cm³)^{1/2}. The polymer includes at least one of polyvinylidene fluoride, polyvinylidene fluoride-hexafluoropropylene, polypropylene, polyvinyl chloride, polyoxyethylene, polymethoxy poly(ethylene glycol) methacrylate, polymethyl methacrylate, polyacrylonitrile, polycarbonate, poly(propylene carbonate), polyvinyl chloride, or polystyrene. For example, the solubility parameter δ1 of the polymer is 12.7, 13.5, 14.7, 15.3, 16.1, 16.5, 17.5, 18.5, 19.2, 19.8, 20.5, 21.5, 22.5, 23.5, or 24.9. By comprehensively adjusting and controlling the solubility parameter δ1 and the type of the polymer, the compatibility of the inorganic filler, the fast ion conductor, and the polymer in the insulation coating is improved, thereby improving the electrolyte resistance and the structural stability of the composite negative electrode sheet, reducing the risk of detachment or powder shedding of the composite negative electrode sheet, and establishing a continuous lithium ion migration channel for the insulation coating, reducing the interface resistance inside the composite negative electrode sheet, and improving the ionic conductivity. It is also possible to select a binder in the active coating that satisfies the solubility parameter difference |Δδ| of more than 0.5 according to the solubility parameter δ1 of the polymer used.

In some embodiments, the molecular weight of the polymer is 500 to 100,000 g/mol. For example, the molecular weight of the polymer is 500 g/mol, 1,000 g/mol, 5,000 g/mol, 10,000 g/mol, 15,000 g/mol, 20,000 g/mol, 25,000 g/mol, 30,000 g/mol, 35,000 g/mol, 40,000 g/mol, 45,000 g/mol, 50,000 g/mol, 55,000 g/mol, 60,000 g/mol, 65,000 g/mol, 70,000 g/mol, 75,000 g/mol, 80,000 g/mol, 85,000 g/mol, 90,000 g/mol, 95,000 g/mol, or 100,000 g/mol.

In some embodiments, the molecular weight of the polymer is 2,000 to 80,000 g/mol.

In some embodiments, the polymer includes polyvinylidene fluoride. Polyvinylidene fluoride (PVDF) exhibits good chemical stability and corrosion resistance, and can effectively resist erosion from polar organic solvent in the electrolytes in lithium batteries. It also possesses favorable binding properties and flexibility, thereby enhancing the structural stability and thermal stability of the composite negative electrode sheet.

In some embodiments, the binder in the active coating includes at least one of styrene-butadiene rubber or hydroxymethyl cellulose.

In some embodiments, the average particle size D50 of the inorganic filler is 20 nm to 3 µm, and the average particle size D50 of the fast ion conductor is 20 nm to 3 µm. For example, the average particle diameter D50 of the inorganic filler is 20 nm, 50 nm, 100 nm, 200 nm, 400 nm, 600 nm, 800 nm, 1 µm, 1.5 µm, 2.0 µm, 2.5 µm, or 3 µm. The average particle diameter D50 of the fast ion conductor is 20 nm, 50 nm, 100 nm, 200 nm, 400 nm, 600 nm, 800 nm, 1 µm, 1.5 µm, 2.0 µm, 2.5 µm, or 3 µm. By comprehensively adjusting the average particle sizes of the inorganic filler and the fast ion conductor, the structural stability, mechanical strength and ion migration rate of the composite negative electrode sheet can be enhanced. On one hand, using the inorganic filler and fast ion conductor improves both the mechanical strength of the composite negative electrode sheet and its electrolyte accommodation volume, and the inorganic filler and the fast ionic conductor in the insulation coating serve as a cross-linking center that hinder the recrystallization of the polymer chain, thereby reducing the crystallinity of the polymer and improving the ion transport efficiency of the insulation coating. On the other hand, when the average particle sizes of the inorganic filler and the fast ion conductor are within the above range, it is possible to improve the distribution uniformity inside the insulation coating, and reduce the risk of excessively fast or slow transport rate in a part of the insulation coating, thereby reducing the direct current resistance (DCR), slowing battery polarization growth, and improving the cycle performance of batteries.

In some embodiments, the ionic conductivity activation energy of the fast ion conductor is ≤0.35 eV.

In some embodiments, the fast ion conductor includes at least one of lithium phosphate (Li₃PO₄), lithium titanate (Li₄Ti₅O₁₂), lithium titanium phosphate [LiTi₂(PO₄)₃], lithium lanthanum tantalate (Li₅La₃Ta₂O₁₂), lithium titanium aluminum phosphate [Li₁₊ₓAlₓTi₂₋ₓ(PO₄)₃], lithium germanium aluminum phosphate [Li_{1.5}Al_{0.5}Ge_{1.5}(PO₄)₃], lithium lanthanum platinum (LLZO, Li₇La₃Zr₂O₁₂, Li₇₋ₓLa₃Zr₂₋ₓNbₓO₁₂, Li₇₋ₓLa₃Zr₂₋ₓTaₓO₁₂), lithium lanthanate (Li₅La₃Nb₂O₁₂, LiₓLa_{2/3-x}TiO₃), a lithium superionic conductor (LISICON), or a sodium superionic conductor (NASICON). Following the specified ratio and utilizing the aforementioned types of the fast ion conductor combined with the inorganic filler and the polymer to prepare the insulating coating can facilitate the formation of additional lithium ion transport path in the insulation coating, improve the ionic conductivity, but also improve the chemical stability of the composite negative electrode sheet and the thermal stability of the lithium ion battery using the composite negative electrode sheet.

In some embodiments, the inorganic filler includes at least one of aluminum oxide, silicon dioxide, titanium dioxide, calcium oxide, zirconium oxide, diatomaceous earth, or kaolin.

In some embodiments, the mass ratio of the inorganic filler to the fast ion conductor is 1 to 9: 1 to 9. For example, the mass ratio of the inorganic filler to the fast ion conductor is 1: 9, 3: 7, 5: 5, 7: 3, or 9: 1. When the mass ratio of the inorganic filler to the fast ion conductor in the insulation coating falls within the above range, the insulation coating can exhibit a higher lithium ion migration number and conductivity.

In some embodiments, the porosity of the insulation coating is 30% to 80%. For example, the porosity of the insulation coating is 30%, 40%, 50%, 60%, 70%, or 80%. By adjusting and controlling the porosity of the insulation coating, the ion transport efficiency and the electronic insulation performance of the insulation coating can be improved while ensuring high mechanical strength and stable structure of the insulation coating.

In some embodiments, the average pore size is 0.001 to 10 µm. For example, the average pore size is 0.001 µm, 0.01 µm, 0.05 µm, 0.1 µm, 0.5 µm, 1 µm, 2 µm, 3 µm, 4 µm, 5 µm, 6 µm, 7 µm, 8 µm, 9 µm, or 10 µm.

In some embodiments, the insulation coating has a thickness of 0.5 to 50 µm. For example, the thickness of the insulation coating is 0.5 µm, 1 µm, 5 µm, 10 µm, 15 µm, 20 µm, 25 µm, 30 µm, 35 µm, 40 µm, 45 µm, or 50 µm.

In some embodiments, the thickness of the active coating is 30 to 70 µm. For example, the thickness of the active coating is 30 µm, 35 µm, 40 µm, 45 µm, 50 µm, 55 µm, 60 µm, 65 µm, or 70 µm.

In some embodiments, the application includes at least one of coating, spray coating, spin coating, dip coating, drop coating, or roller coating.

In some embodiments, the solvent includes N,N-dimethylacetamide.

In some embodiments, during S2, the insulation slurry is dried to form the insulation coating at 50°C to 70°C for 7 to 9 hours.

In some embodiments, the insulation coating on the composite negative electrode sheet faces the separator.

### Example 1

The present embodiment provides a composite negative electrode sheet having a structure as shown in FIG. 1. The composite negative electrode sheet includes an insulation coating 3, an active coating 2, and a current collector 1, which are arranged in sequence. The active coating is prepared from an active slurry and the insulation coating is prepared from an insulation slurry. The current collector is copper foil.

The insulation slurry includes a polymer, an inorganic filler, a fast ionic conductor, and a solvent, where a mass ratio of the fast ionic conductor, the inorganic filler, and the polymer is 80: 10: 10. Aluminum oxide Al₂O₃ with an average particle size D50 of 1 µm was used as the inorganic filler. Lithium lanthanate Li₅La₃Nb₂O₁₂ having an ionic conductivity activation energy ≤0.35 eV and an average particle size of 2 µm was used as the fast ion conductor. Polyvinylidene fluoride PVDF with a solubility parameter δ1 of 23.10 (J/cm³)^{1/2} and a molecular weight of 14,000 g/mol was used as the polymer. Acetonitrile was used as the solvent.

The active slurry includes an active material, a binder, a conductive agent, and an aqueous solvent. The active material was artificial graphite, and the binder was styrene-butadiene rubber (SBR) having a solubility parameter δ2 of 17.3 (J/cm³)^{1/2}. Thus, it can be calculated that the solubility parameter difference |Δδ| between the polymer and the binder is greater than 0.5. A mass ratio of the styrene-butadiene rubber, the artificial graphite, and the conductive agent is 4: 89: 7.

The preparation is carried out with the following operations.

S1. The active material, the binder, the conductive agent, and the aqueous solvent were mixed homogeneously and coated on the current collector, and dried and rolled to obtain the active coating having a thickness of 40 µm.

S2. Then, the polymer and the solvent were mixed homogeneously, and the inorganic filler and the fast ion conductor were sequentially added to the reaction system. The mixture was stirred homogeneously to obtain the insulation slurry. The insulation slurry was coated on the active coating, and vacuum dried at 60°C for 8 hours, so that the insulation coating and the current collector were connected through the active coating to obtain the composite negative electrode sheet. The prepared insulation coating in the composite negative electrode sheet has a thickness of 15 µm, a pore size of 1.6 µm, and a porosity of 40%.

### Example 2

A composite negative electrode sheet was prepared with reference to the preparation method provided in Example 1, except that a polytetrafluoroethylene having a solubility parameter δ1 of 12.7 (J/cm³)^{1/2} was used instead of the polymer in Example 1 in the preparation of the insulation coating, and the remaining raw materials and their ratios and preparation were consistent with those of Example 1.

### Example 3

A composite negative electrode sheet was prepared with reference to the preparation method provided in Example 1, except that a polyvinyl chloride having a solubility parameter δ1 of 19.8 (J/cm³)^{1/2} was used instead of the polymer in Example 1 in the preparation of the insulation coating, and the remaining raw materials and their ratios and preparation were consistent with those of Example 1.

### Example 4

A composite negative electrode sheet was prepared with reference to the preparation method provided in Example 1, except that aluminum oxide having an average particle size D50 of 20 nm was used instead of the inorganic filler in Example 1, and lithium lanthanate Li₅La₃Nb₂O₁₂ having an average particle size D50 of 30 nm was used instead of the fast ion conductor in Example 1 in the preparation of the insulation coating. The remaining raw materials and their ratios and preparation method were consistent with those of Example 1.

### Example 5

A composite negative electrode sheet was prepared with reference to the preparation method provided in Example 1, except that aluminum oxide having an average particle size of 3 µm was used instead of the inorganic filler in Example 1, and lithium lanthanate Li₅La₃Nb₂O₁₂ having an average particle size of 3 µm was used instead of the fast ion conductor in Example 1 in the preparation of the insulation coating. The remaining raw materials and their ratios and preparation method were consistent with those of Example 1.

### Example 6

A composite negative electrode sheet was prepared with reference to the preparation method provided in Example 1, except that the amount of the polymer was adjusted so that a mass ratio of the total mass of the inorganic filler and the fast ion conductor to the mass of the polymer was 75: 25 in the preparation of the insulation coating. The remaining raw materials and their ratios and preparation method, in particular, the mass ratio of the inorganic filler to the fast ion conductor, were consistent with those of Example 1.

### Example 7

A composite negative electrode sheet was prepared with reference to the preparation method provided in Example 1, except that the amount of the polymer was adjusted so that a mass ratio of the total mass of the inorganic filler and the fast ion conductor to the mass of the polymer was 80: 20 in the preparation of the insulation coating. The remaining raw material, their ratios and preparation method, in particular, the mass ratio of the inorganic filler to the fast ion conductor, were consistent with those of Example 1.

### Example 8

A composite negative electrode sheet was prepared with reference to the preparation method provided in Example 1, except that the amount of the polymer was adjusted so that a mass ratio of the total mass of the inorganic filler and the fast ion conductor to the mass of the polymer was 94: 6 in the preparation of the insulation coating. The remaining raw material, their ratios and preparation method, in particular the mass ratio of the inorganic filler to the fast ion, were consistent with those of Example 1.

### Example 9

A composite negative electrode sheet was prepared with reference to the preparation method provided in Example 1, except that in the preparation of the insulation coating, the amount of the polymer was adjusted so that a mass ratio of the total mass of the inorganic filler and the fast ion conductor to the mass of the polymer was 96: 4. The remaining raw material, their ratios and preparation method, in particular the mass ratio of the inorganic filler to the fast ion conductor was consistent with those of Example 1.

### Comparative Example 1

A composite negative electrode sheet was prepared with reference to the preparation method provided in Example 1, except that the preparation of the insulation coating was omitted. The remaining raw material, their ratios and preparation method were consistent with those of Example 1.

### Comparative Example 2

A lithium ion battery was prepared with reference to the preparation method provided in Example 1. The lithium ion battery includes a positive electrode sheet, a negative electrode sheet, and a composite separator disposed between the positive electrode and the negative electrode.

The negative electrode sheet includes a current collector and an active coating made from an active slurry that is consistent with the active slurry in Example 1.

The composite separator includes a base film (manufactured by SEMCORP, with a thickness of 7 µm) and an insulation coating made of an insulation slurry that is consistent with the insulation slurry in Example 1. The preparation of the composite separator was the same as the preparation provided in Example 1, except that the insulation slurry in the present comparative example was coated on the base film. In the present comparative example, the insulation coating was connected to the negative electrode sheet, and the remaining raw materials and their ratios and preparation methods were consistent with those in Example 1.

1mol/L LiPF₆/EC/PC was used as the electrolyte. The positive electrode sheet, the separator, and the negative electrode sheet were sequentially stacked so that the insulation coating in the negative electrode sheet was connected to the separator, and then assembled to obtain a bare cell. The bare cell was placed in an outer packaging foil, and the prepared electrolyte was injected into the dried cell, and then subjected to vacuum packaging, standing, formation, and shaping to obtain a 18650 cylindrical cell.

### Comparative Example 3

A lithium ion battery was prepared with reference to the preparation method provided in Example 1. The lithium ion battery includes a composite positive electrode sheet, a negative electrode sheet, and a composite separator disposed between the positive electrode and the negative electrode.

The negative electrode sheet includes a current collector and an active coating made from an active slurry that is consistent with the active slurry in Example 1.

The composite positive electrode sheet was prepared according to the preparation method provided in Example 1, except that the active coating of the positive electrode was provided with an insulation coating, the raw materials and their ratios of which were consistent with that in Example 1. That is, the composite positive electrode sheet in the present comparative example includes the current collector, the active coating, and the insulation coating. The composite positive electrode sheet was prepared according to the preparation method provided in Example 1, except that the insulation slurry in the present comparative example was coated on the active coating of the positive electrode, where the ternary material was used as the active material of the positive electrode, the polyvinylidene fluoride PVDF was used as the binder in the active coating of the positive electrode, and the insulation coating in the composite positive electrode sheet was connected to the separator.

1mol/L LiPF₆/EC/PC was used as the electrolyte. The base film was manufactured by SEMCORP. The positive electrode sheet, the separator, and the negative electrode sheet were sequentially stacked so that the insulation coating of the negative electrode sheet was connected to the separator, and then assembled to obtain a bare cell. The bare cell was placed in an outer packaging foil, and the prepared electrolyte was injected into the dried cell, and then subjected to vacuum packaging, standing, formation, and shaping to obtain a 18650 cylindrical cell.

### Comparative Example 4

A composite negative electrode sheet was prepared with reference to the preparation method provided in Example 1, except that a styrene-butadiene rubber having a solubility parameter δ1 of 17.8 (J/cm³)^{1/2} was used instead of the polymer in Example 1 in the preparation of the composite negative electrode sheet, so that the solubility parameter difference |Δδ| between the polymer and the binder was 0.5. The remaining raw materials and their ratios and preparation method, in particular the mass ratio of the inorganic filler to the fast ion conductor, were consistent with those of Example 1.

### Comparative Example 5

A composite negative electrode sheet was prepared with reference to the preparation method provided in Example 1, except that a polyvinylidene fluoride having a solubility parameter δ2 of 23.10 (J/cm³)^{1/2} was used instead of the binder in Example 1 in the preparation of the composite negative electrode sheet, so that the solubility parameter difference |Δδ| between the polymer and the binder was 0. The remaining raw materials and their ratios and preparation method, in particular the mass ratio of the inorganic filler to the fast ion conductor, were consistent with those of Example 1.

### Comparative Example 6

A composite negative electrode sheet was prepared with reference to the preparation method provided in Example 1, except that an inorganic filler Al₂O₃ with an equal mass was used instead of the fast ion conductor in Example 1 in the preparation of the insulation coating. The remaining raw materials and their ratios and preparation method, in particular the average particle size of the inorganic filler, were consistent with those of Example 1.

### Comparative Example 7

A composite negative electrode sheet was prepared with reference to the preparation method provided in Example 1, except that a fast ion conductor lithium lanthanate Li₅La₃Nb₂O₁₂ with an equal mass was used instead of the inorganic filler in Example 1 in the preparation of the insulation coating. The remaining raw materials and their ratios and preparation method, in particular the average particle size of the fast ion conductor, were consistent with those of Example 1.

### Comparative Example 8

A composite negative electrode sheet was prepared with reference to the preparation method provided in Example 1, except that a first coating and a second coating were used instead of the insulation coating in Example 1 in the preparation of the composite negative electrode sheet.

The first coating is different from the insulation coating in Example 1 in that an inorganic filler Al₂O₃ with an equal mass was used instead of the fast ion conductor in Example 1. The second coating is different from the insulation coating in Example 1 in that a fast ion conductor lithium lanthanate Li₅La₃Nb₂O₁₂ with an equal mass was used instead of the inorganic filler in Example 1. The remaining raw materials and their ratios and preparation method, in particular the average particle size of the fast ionic conductor and the inorganic filler, were consistent with those of Example 1.

That is, the present comparative example provides a composite negative electrode sheet including the current collector, the active coating, the first coating, and the second coating disposed in sequence, where the first coating comprises the polymer and the inorganic filler, and the second coating comprises the fast ion conductor and the polymer.

### Test example

Test specimens include the composite negative electrode sheets and the lithium ion batteries provided in Examples 1 to 9 and Comparative Examples 1 to 8.

### Test items and test methods:

(1) Peel strength: the prepared negative electrode sheet was cut to a size of 30 mm*200 mm and subjected to tensile test at 180° to measure the interface peel force of the electrode sheet.
(2) Battery Performance Test:
   The composite negative electrode sheets provided in Examples 1 to 9, Comparative Example 1, and Comparative Examples 4 to 8 were used as the negative electrode sheets, respectively, the ternary material was used as a positive material to form a positive electrode sheet, and 1mol/L LiPF₆/EC/PC was used as the electrolyte. The base film produced by SEMCORP was used as the separator. The positive electrode sheet, the separator, and the negative electrode sheet were sequentially stacked, where the insulation coating in the negative electrode sheet was connected to the separator, and then assembled to obtain a bare cell. The bare cell was placed in an outer packaging foil, and the prepared electrolyte was injected into the dried cell, and then subjected to vacuum packaging, standing, formation, and shaping to obtain a 18650 cylindrical cell. The prepared batteries and the lithium ion batteries provided in Comparative Examples 2 to 3 were subjected to the following battery performance test.
   ①Thermal runaway test: safety performance of the battery was verified through thermal chamber testing, in which the battery to which thermocouples were attached was placed in a hot box, and heated from an initial temperature (room temperature) to a higher temperature at a heating rate of 5±1°C/min. The temperature of the hot box was required to be 150°C, then constant at this temperature, and the temperature of the battery was recorded as a function of time. The time from constant temperature of the battery in a 150°C hot box to thermal runaway (runaway of the internal exothermic reaction of the battery, causing smoke and combustion) was determined.
   (2) Capacity retention: at 25°C, the lithium-ion battery was charged at 1C constant current and constant voltage to 4.2 V and a 0.05C cutoff current, left standing for 10 min, then discharged at 1C constant current to 2.5 V, and left standing for 10 min. After 400 cycles, the capacity retention rate of the battery under 1C/1C cycling condition for 400 cycles was recorded.

Test results: As shown in Table 1.

### Table 1. Performance results of each subject

**[Table 1_sm_0001]**

| No.: | Interfacial Peel Strength (N/m) | Thermal runaway time (min) | Capacity retention (%) |
|---|---|---|---|
| Example 1 | 22.3 | 102 | 98.6 |
| Example 2 | 22.0 | 99 | 96.2 |
| Example 3 | 22.1 | 100 | 97.1 |
| Example 4 | 23.1 | 84 | 76.3 |
| Example 5 | 18.9 | 89 | 85.2 |
| Example 6 | 24.7 | 76 | 86.9 |
| Example 7 | 23.5 | 81 | 87.4 |
| Example 8 | 16.4 | 80 | 87.5 |
| Example 9 | 15.8 | 73 | 85.7 |
| Comparative Example 1 | 18.4 | 20 | 97.9 |
| Comparative Example 2 | 19.6 | 75 | 89.8 |
| Comparative Example 3 | 19.7 | 62 | 85.2 |
| Comparative Example 4 | 21.6 | 65 | 84.3 |
| Comparative Example 5 | 17.2 | 57 | 82.5 |
| Comparative Example 6 | 21.9 | 74 | 80.1 |
| Comparative Example 7 | 22.2 | 70 | 95.4 |
| Comparative Example 8 | 20.3 | 78 | 74.6 |

### Structural analysis:

Comparing the test performance of Examples 1 to 9 with those of Comparative Examples 1 to 8 in Table 1, it is found that the composite negative electrode sheets provided in Examples 1 to 9 have higher interfacial peel strength, better electronic insulation effect, and higher ion transport efficiency than those of Comparative Examples 1 to 8, so that the batteries using the composite negative electrode sheets provided in Examples 1 to 9 are not prone to an internal short circuit, and have good thermal stability and high capacity cycle retention rate.

Comparing the electrode sheets and the batteries provided in Example 1 with those in Comparative Examples 1 to 3, it is found that the insulation coating, when provided in the composite negative electrode sheet, can ensure the normal transmission of lithium ions during the battery cycling, and effectively prevents direct contact between the conductive components of the positive and negative electrodes. Even if the separator shrinks at a high temperature, the internal circuit of the battery can be prevented. Here, the battery provided in Comparative Example 1 does not include any insulation coating, and the shrinkage of the separator occurs in a high-temperature environment, resulting in direct contact between the positive and negative electrodes, so that the thermal runaway time of the battery in Comparative Example 1 is short. In the battery provided in Comparative Example 2, an insulation coating is provided on the surface of the separator, but referring to Table 2, the thermal stability of the battery in Comparative Example 2 is poor, and the capacity retention rate is low, and no significant improvement in the case of lithium precipitation on the negative electrode is achieved. The reason is that the insulation coating attached to the surface of the separator may be subjected to powder shedding, detachment, folding, or the like with the shrinkage of the separator in a high-temperature environment, thereby providing one or more structurally vulnerable locations where short circuits may occur between the positive and negative electrodes. In the battery provided in Comparative Example 3, since an insulation coating is provided on the surface of the positive electrode sheet, material leakage easily occurs between the insulation coating and the active coating of the positive electrode, and there is no significant improvement in the case of lithium precipitation on the negative electrode, whereby the battery provided in Comparative Example 3 exhibits a shorter thermal runaway time and a lower capacity retention rate.

Comparing the performance indices in Table 1 of the electrode sheets and batteries provided in Examples 1 to 3 with those in Comparative Examples 4 to 5, it is found that the interfacial peel strength, thermal runaway time, and capacity retention measured in Examples 1 to 3 are higher than the corresponding performance indices of Comparative Examples 4 to 5. Therefore, when the solubility parameter difference |△δ| between the polymer and the binder is greater than 0.5, the composite negative electrode sheet has a higher structural stability and a lower interfacial internal resistance between the insulation coating and the active coating. During the experiment, it is observed that material leakage occurs between the insulating coating and active coating in the composite negative electrode sheets provided in Comparative Examples 4-5, resulting in decreased battery cycle performance.

Comparing the electrode sheets and batteries provided in Example 1 with those in Comparative Examples 6 to 8, it is found that the battery of Example 1 has higher thermal stability and battery cycle performance than the batteries provided in Comparative Examples 6 to 8, indicating that when the insulation coating includes the polymer, the inorganic filler, and the fast ionic conductor, the insulation coating has the advantages of electronic insulation and high ion transport efficiency, which can improve the overall performance of the battery. Among them, in Comparative Example 8, the interface impedance between the first coating and the second coating is large, resulting in resistance of lithium ion transmission.

## Claims

1. A composite negative electrode sheet comprising a current collector, an active coating and an insulation coating that are disposed in sequence, wherein the insulation coating comprises a polymer, an inorganic filler, and a fast ion conductor, the active coating comprises a binder and an active material, and a solubility parameter difference between the polymer and the binder is expressed as |Δδ|, wherein |△δ|>0.5 (J/cm³)^{1/2}

2. The composite negative electrode sheet according to claim 1, wherein in the insulation coating, a ratio of a total mass of the inorganic filler and the fast ion conductor to a mass of the polymer is (80 to 94): (6 to 20).

3. The composite negative electrode sheet according to claim 1, wherein a solubility parameter of the polymer is expressed as δ1, wherein the δ1 is 12.7 to 24.9 (J/cm³)^{1/2}; and
the polymer comprises at least one of polyvinylidene fluoride, polyvinylidene fluoride-hexafluoropropylene, polypropylene, polyvinyl chloride, polyoxyethylene, polymethoxy poly(ethylene glycol) methacrylate, polymethyl methacrylate, polyacrylonitrile, polycarbonate, poly(propylene carbonate), polyvinyl chloride, or polystyrene.

4. The composite negative electrode sheet according to claim 1, wherein the inorganic filler has an average particle size D50 of 20 nm to 3 µm, and the fast ion conductor has an average particle size D50 of 20 nm to 3 µm.

5. The composite negative electrode sheet according to claim 4, wherein the fast ion conductor comprises at least one of lithium phosphate, lithium titanate, lithium titanium phosphate, lithium lanthanum tantalate, lithium titanium aluminum phosphate, lithium germanium aluminum phosphate, lithium lanthanum platinum, lithium lanthanate, a lithium superionic conductor, or a sodium superionic conductor.

6. The composite negative electrode sheet according to claim 4, wherein the inorganic filler comprises at least one of aluminum oxide, silicon dioxide, titanium dioxide, calcium oxide, zirconium oxide, diatomaceous earth, or kaolin.

7. The composite negative electrode sheet according to any one of claims 1 to 6, wherein a porosity of the insulation coating is 30% to 80%.

8. The composite negative electrode sheet according to any one of claims 1 to 6, wherein a thickness of the insulation coating is 0.5 µm to 50 µm.

9. A method for preparing a composite negative electrode sheet according to any one of claims 1 to 8, comprising:
S1. uniformly mixing the binder and the active material to prepare an active slurry, and applying the active slurry to the current collector to prepare the active coating;
S2. uniformly mixing the polymer with a solvent to prepare a reaction system, adding the inorganic filler and the fast ion conductor to the reaction system to prepare an insulation slurry, applying the insulation slurry to the active coating to form the insulation coating so that the insulation coating and the current collector are connected through the active coating, to prepare the composite negative electrode sheet.

10. A lithium ion battery comprising a positive electrode, a negative electrode, an electrolyte, and a separator disposed between the positive electrode and the negative electrode, the negative electrode comprising the composite negative electrode sheet according to any one of claims 1 to 8.
